# EUROPEAN PATENT APPLICATION

(11) **EP 4 733 170 A2**
(43) Date of publication of application: **29.04.2026**
(21) Application number: 26164562.6
(22) Date of filing: 22.02.2023
(51) Int. Cl.: B62B 9/10

(54) **CHILD CARRIER**

(30) Priority: 22.02.2022 CN 202210162948
(62) Divisional of application: 23707896.9
(71) Applicant: Wonderland Switzerland AG, 6312 Steinhausen (CH)
(72) Inventor: YANG, Tao, 523648 Dongguan, Guangdong (CN)
(74) Representative: Hoffmann Eitle

(57) **Abstract**

The present disclosure refers to a child carrier (100), comprising: a main frame (10) comprising a pair of front leg rods (11), a pair of rear leg rods (12), a handle pushing rod (13), two armrests (15), and two auxiliary rods (16), wherein top ends of the front leg rod (11) and the rear leg rod (12) on the same side are pivotally connected to a front end of the armrest (15) on the same side, the handle pushing rod (13) has two side rod sections (131), bottom ends of the two side rod sections (131) are pivotally connected to the two rear leg rods (12), respectively, the two auxiliary rods (16) are located on an inner side of the two side rod sections (131), respectively, a bottom end of the auxiliary rod (16) is pivotally connected to the bottom end of the side rod section (131), and a rear end of the armrest (15) is pivotally connected to a top end of the auxiliary rod (16); a seat frame (20) provided on the main frame (10); and a backrest frame (30) comprising: a backrest assembly (32) capable of rotating between a vertical position and a horizontal position relative to the seat frame (20); a headrest assembly (34) pivotally connected to a top of the backrest assembly (32); a linkage side element (38) slidably connected to the backrest assembly (32), a top of the linkage side element (38) being pivotally connected to the headrest assembly (34), and a bottom of the linkage side element (38) being connected to the seat frame (20) through a connecting belt (40); and a resilient element (36) provided between the backrest assembly (32) and the headrest assembly (34).

## Description

### CROSS-REFERENCE TO RELATED APPLICATIONS

This application claims priority of Chinese Patent Application No. 2022101629481, filed on February 22, 2022, the content of which is hereby incorporated by reference in its entirety.

### TECHNICAL FIELD

The present disclosure relates to child carriers, in particular to a child carrier with a movable backrest frame.

### BACKGROUND

Conventional child carriers currently on the market, such as baby carriages, include a backrest with a headrest. The backrest can rotate relative to a frame of the child carrier into an inclined position and a horizontal position. The headrest is connected to a top edge of the backrest and can be rotated relative to the backrest to a position approximately parallel or perpendicular to the backrest.

When the child is in the child carrier, the backrest can be rotated to the inclined position, so that the back of the child can rest against the backrest. At this time, the headrest can be adjusted to be approximately parallel to the backrest. When the baby needs to lie down, such as sleeping or changing diapers, by rotating the backrest to the horizontal position, the baby can lie on the backrest more comfortably, and at the same time, by rotating the headrest to a state substantially perpendicular to the backrest, a stopper can be provided in a direction of the child's head to prevent the child from sliding out in a direction of the headrest.

### SUMMARY

According to various embodiments, a child carrier is provided.

A child carrier includes a main frame, a seat frame provided on the main frame, and a backrest frame. The backrest frame includes a backrest assembly capable of rotating between a vertical position and a horizontal position relative to the seat frame, a headrest assembly pivotally connected to a top of the backrest assembly, a linkage side element slidably connected to the backrest assembly, and a resilient element provided between the backrest assembly and the headrest assembly. A top of the linkage side element is pivotally connected to the headrest assembly, and a bottom of the linkage side element is connected to the seat frame through a connecting belt.

Details of one or more embodiments of the present application are set forth in the following drawings and descriptions. Other objects, purposes and advantages will become apparent upon review of the following specification, drawings and claims.

### BRIEF DESCRIPTION OF THE DRAWINGS

In order to illustrate the embodiments of the present application more clearly, the drawings used in the embodiments will be described briefly. Apparently, the following described drawings are merely for the embodiments of the present application, and other drawings can be derived by those of ordinary skill in the art without any creative effort.
FIG. 1 is a perspective view of a child carrier according to an embodiment.
FIG. 2 is a partial enlarged view of a portion A in FIG. 1.
FIG. 3 is a perspective view of the child carrier shown in FIG. 1 viewed from another aspect.
FIG. 4 is a partial enlarged view of a portion B in FIG. 3.
FIG. 5 is a perspective view of the child carrier according to an embodiment, showing a backrest assembly in a vertical position.
FIG. 6 is a partial enlarged view of a portion C in FIG. 5.
FIG. 7 is a side view of the child carrier shown in FIG. 5.
FIG. 8 is a perspective view of the child carrier according to an embodiment, showing the backrest assembly in a horizontal position.
FIG. 9 is a side view of the child carrier shown in FIG. 8.
FIG. 10 is a side view of the child carrier shown in FIG. 9 in another state.

### DETAILED DESCRIPTION OF THE EMBODIMENTS

In order to facilitate the understanding of the present application, the present application is described more comprehensively below with reference to the relevant accompanying drawings. Preferred embodiments of the present application are shown in the accompanying drawings. However, the present application may be implemented in many different forms and is not limited to the embodiments described herein. On the contrary, the purpose of providing these embodiments is to make the public content of the present application more thoroughly and comprehensively understood.

It should be noted that when an element is referred to as being "fixed to" or "disposed on" another element, it can be directly on the other element or an intervening element may also be present. When an element is referred to as being "connected" to another element, it can be directly connected to the other element or intervening elements may also be present. The terms "vertical", "horizontal", "upper", "lower", "left", "right" and similar expressions used herein are for the purpose of illustration only and do not represent the only embodiment.

Unless otherwise defined, all technical and scientific terms used herein have the same meaning as commonly understood by one of ordinary skill in the art to which this application belongs. The terms used herein in the description of the present application are for the purpose of describing specific embodiments only, and are not intended to limit the present application.

As described in the background, the current shortcoming of the child carrier is that a rotation of the headrest relative to the backrest requires a user to operate the headrest, and when the headrest is rotated from the horizontal position to the inclined position, the headrest cannot automatically return to a state substantially parallel to the backrest, the headrest cannot automatically return to a state substantially parallel to the backrest, which is inconvenient to use, and during the change of the backrest, there are safety problems or situations that cause discomfort to young children. In order to overcome the above-mentioned problems, it is necessary to provide a child carrier with an automatically reversible headrest.

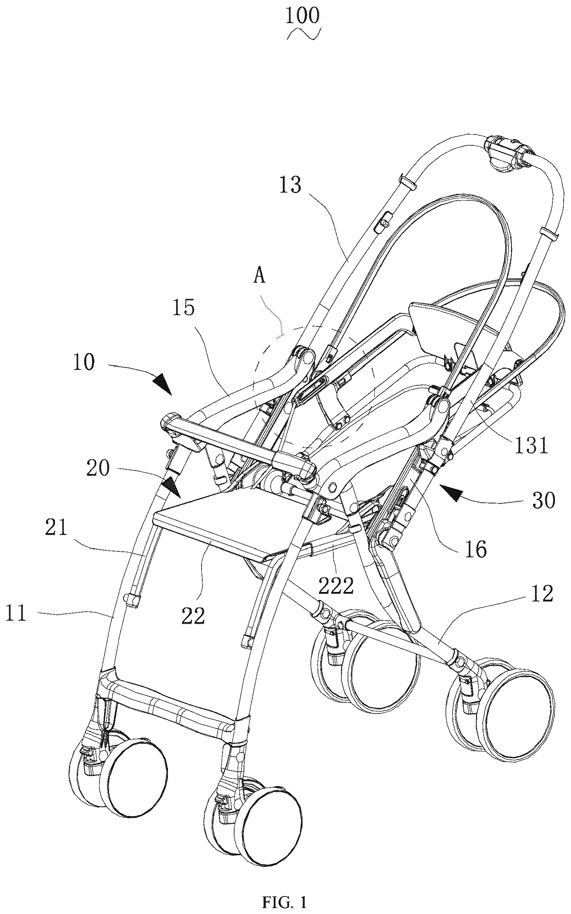

Referring to FIG. 1, a child carrier 100 according to an embodiment includes a main frame 10, a seat frame 20, and a backrest frame 30. The seat frame 20 is provided on the main frame 10. The backrest frame 30 is pivotally provided on the seat frame 20.

The main frame 10 includes a pair of front leg rods 11, a pair of rear leg rods 12, a handle pushing rod 13, two armrests 15, and two auxiliary rods 16. Distal ends of the front leg rod 11 and the rear leg rod 12 are respectively connected to casters (not labelled). Top ends of the front leg rod 11 and the rear leg rod 12 on the same side are pivotally connected to a front end of the armrest 15 on the same side. In this embodiment, the handle pushing rod 13 is substantially in an inverted U-shape and has two side rod sections 131 spaced apart in a left-right direction. Bottom ends of the two side rod sections 131 are pivotally connected to the two rear leg rods 12, respectively. The two auxiliary rods 16 are located on an inner side of the two side rod sections 131, respectively, and an extending direction of the auxiliary rod 16 is substantially the same as that of the side rod section 131. Bottom end of the auxiliary rod 16 is pivotally connected to the bottom end of the side rod section 131, and a rear end of the armrest 15 is pivotally connected to a top end of the auxiliary rod 16.

As shown in FIG. 1, the seat frame 20 includes a pair of seat support rods 21 and a seat plate 22 slidably provided on the seat support rods 21. Specifically, the seat support rod 21 is substantially L-shaped, one end of the seat support rod 21 is pivotally connected to the front leg rod 11, and the other end of the seat support rod 21 is pivotally connected to the auxiliary rod 16. Rear ends of the seat plate 22 are pivotally connected to the two auxiliary rods 16, respectively. Both sides of the seat plate 22 are provided with sleeve portions 222. The sleeve portion 222 is sleeved on the seat support rod 21 and can be driven by the handle pushing rod 13 to slide on the seat support rod 21.

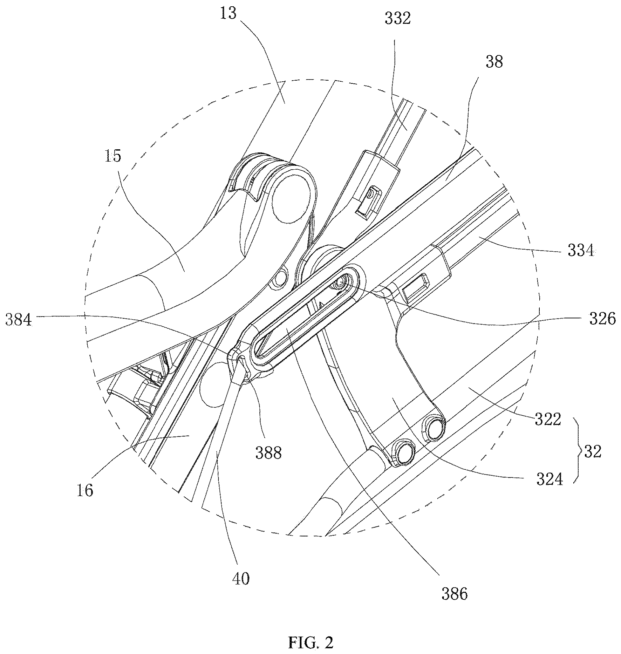

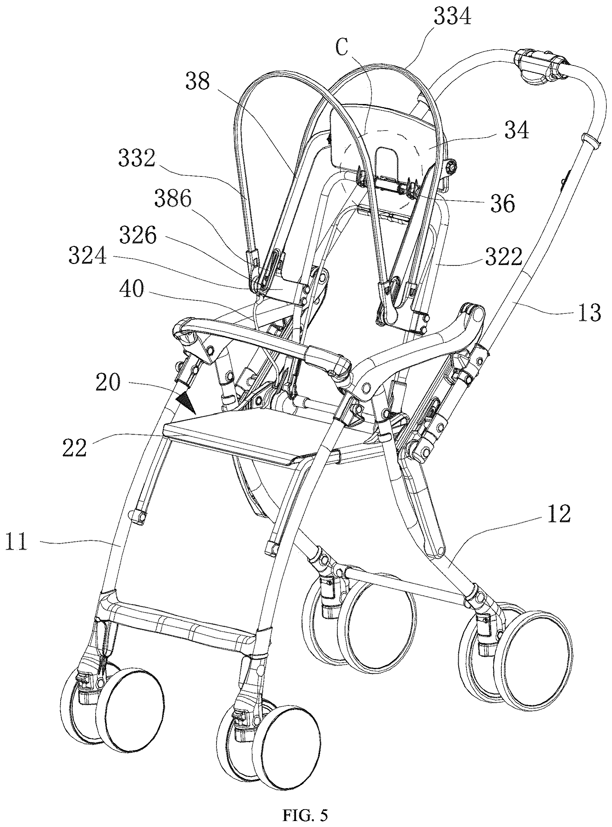

As shown in FIGS. 2 to 4, the backrest frame 30 includes a backrest assembly 32, a headrest assembly 34, a resilient element 36 (see FIG. 5), a pair of linkage side elements 38, and a pair of connecting seats 39.

The backrest assembly 32 includes a backrest support element 322 and two canopy fixing bases 324 fixed on the backrest support element 322. The backrest support element 322 is substantially in an inverted U-shape, and has two side sections 321 spaced apart in the left-right direction, and a top section 323 connecting tops of the two side sections 321. A distal end of each side section 321 is fixed on the connecting seat 39 and can rotate forward or backward with the connecting seat 39 relative to the seat frame 20. The headrest assembly 34 is substantially plate-shaped, a lower end of the headrest assembly 34 is rotatably connected to the top section 323 of the backrest support element 322 through a hinge.

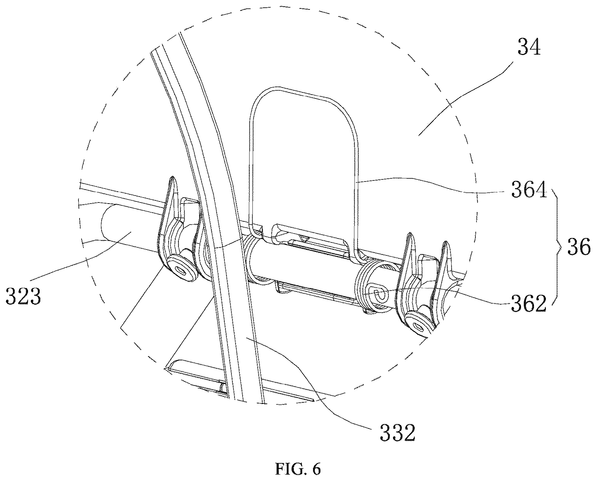

Referring to FIG. 5 and FIG. 6, the resilient element 36 is provided between the headrest assembly 34 and the backrest assembly 32. More specifically, the resilient element 36 includes two torsion spring portions 362 sleeved on the top section 323, and a pushing portion 364 connected between the two torsion spring portions 362 and substantially in an inverted U-shape. The pushing portion 364 abuts against a front of the headrest assembly 34, and the two torsion spring portions 362 are subjected to a force of preload torsion, so that the pushing portion 364 is biased backward toward the headrest assembly 34, and the headrest assembly 34 is kept in a state substantially parallel to the backrest assembly 32.

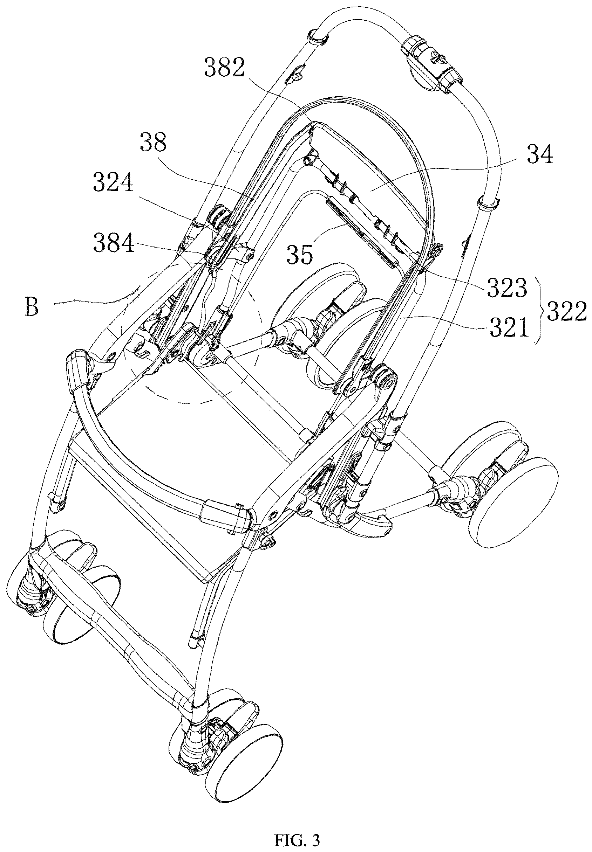

Referring to FIG. 2 and FIG. 3, again, each canopy fixing base 324 is fixedly provided on the side section 321, and the canopy fixing base 324 extends in a direction substantially perpendicular to the side section 321. The backrest assembly 32 further includes a first canopy support strip 332 and a second canopy support strip 334. Referring to FIG. 2 and FIG. 5, the first canopy support strip 332 is substantially in an inverted U-shape, and both ends of the first canopy support strip 332 are pivotally connected to outer sides of tops of the two canopy fixing bases 324, respectively. A shape of the second canopy support strip 334 is similar to that of the first canopy support strip 332, and both ends of the second canopy support strip 334 are respectively fixed on a side of the two canopy fixing bases 324. A canopy (not shown) of the child carrier 100 can be covered between the first canopy support strip 332 and the second canopy support strip 334, and an expanding area of the canopy can be adjusted by pivoting the first canopy support strip 332.

Referring to FIG. 2 and FIG. 3, each of the linkage side elements 38 is substantially a slightly arc-shaped hollow strip, which has a top end 382 and a bottom end 384. The top ends 382 of the two linkage side elements 38 are pivotally connected to left and right edges of the headrest assembly 34, respectively. Therefore, under the pulling of the linkage side element 38, the headrest assembly 34 can overcome an elastic force of the resilient member 36 and rotate relative to the top section 323. The bottom end 384 is axially provided with an elongated sliding groove 386, which extends in a direction substantially parallel to the side section 321. A positioning pin 326 capable of sliding in the sliding groove 386 is provided on an inner side of the top of the canopy fixing base 324. In an embodiment, the positioning pin 326 is cylindrical, both ends of the sliding groove 386 are arc-shaped, so that when the positioning pin 326 is located at any end of the sliding groove 386, the linkage side element 38 can rotate around the positioning pin 326 at a certain angle relative to the canopy fixing base 324.

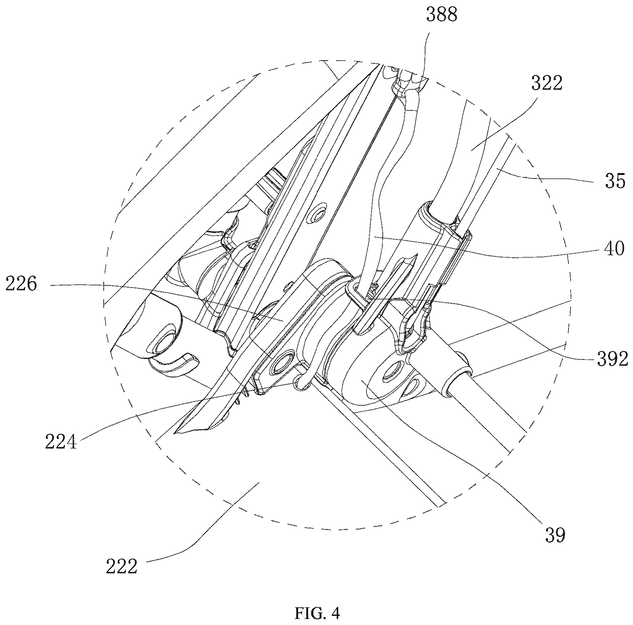

The two connecting seats 39 are respectively pivotally connected to the seat frame 20. Specifically, referring to FIG. 3 and FIG. 4, an edge of the seat plate 22 extends vertically upwards to form a pivot portion 226, and the connecting seat 39 is pivotally connected to an inner side of the pivot portion 226 through a pin, such that the backrest support element 322 fixed on the connecting seat 39 can rotate relative to the seat frame 20. Referring to FIGS. 3 and 4, the backrest assembly 32 further includes an angle adjustment mechanism 35. The angle adjustment mechanism 35 is substantially inverted U-shaped, an end of the angle adjustment mechanism 35 is movably connected to the connecting seat 39. The angle adjustment mechanism 35 is configured to adjust and lock an inclination angle of the backrest frame 30 relative to the seat frame 20, so that the backrest frame 30 can be positioned in a vertical position, a horizontal position or any inclined position therebetween, thus providing more application scenarios for the user.

Referring to FIG. 2 and FIG. 4, a bottom of the linkage side element 38 is further connected to the seat frame 20 through a connecting belt 40. Specifically, the bottom end 384 is provided with a hanging lug 388, the seat plate 22 is provided with a fixing hole 224 adjacent to the connecting seat 39, the connecting seat 39 is provided with a limiting hole 392. One end of the connecting belt 40 is fixed on the hanging lug 388, and the other end of the connecting belt 40 extends through the limiting hole 392 and is fixed in the fixing hole 224. In other embodiments, the connecting belt 40 can also be directly connected between the hanging lug 388 and the fixing hole 224, and in this case, the limiting hole 392 can also be omitted. The connecting belt 40 is a bendable flexible webbing made of materials such as nylon, cloth, rubber bands or metal chains. The connecting belt 40 has a loose state and a tight state, which will be described in detail below in conjunction with different usage scenarios.

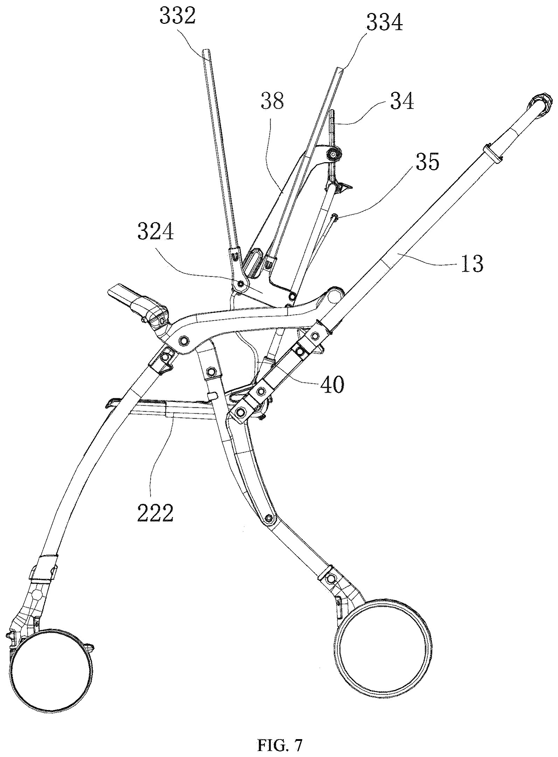

Referring to FIG. 5 to FIG. 7, when the backrest assembly 32 is in the vertical position, the backrest assembly 32 stands substantially upright relative to the seat frame 20. At this time, the positioning pin 326 is located at the end of the sliding groove 386 adjacent to the connecting seat 39, and the connecting belt 40 is in the loose state without tension. The headrest assembly 34 is substantially parallel to the backrest assembly 32 due to a biasing force of the resilient element 36, so that when the child is seated in the child carrier 100, his or her body can lean back against the backrest assembly 32, and the head can lean back against the headrest assembly 34.

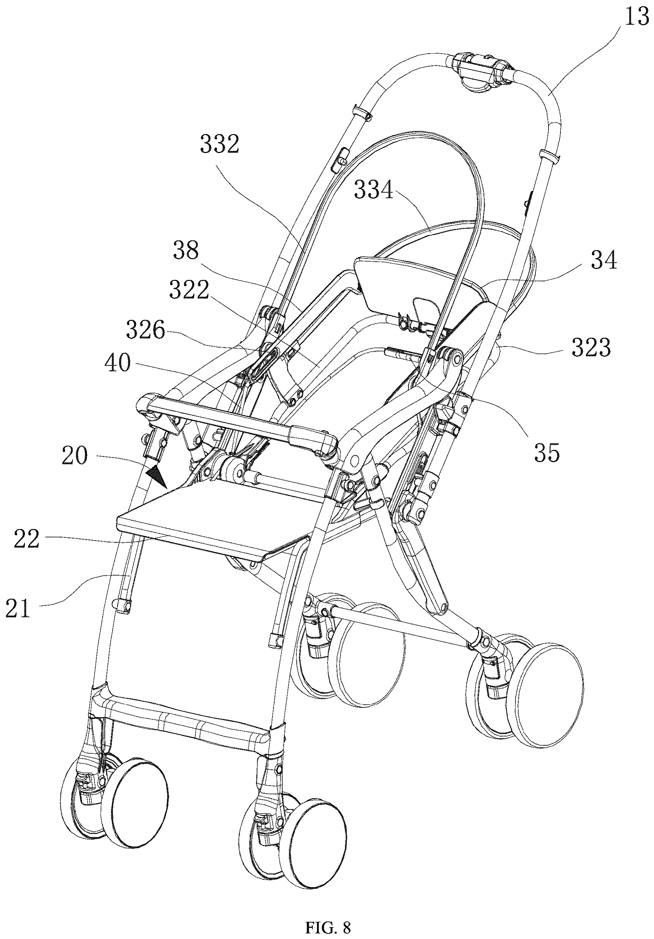

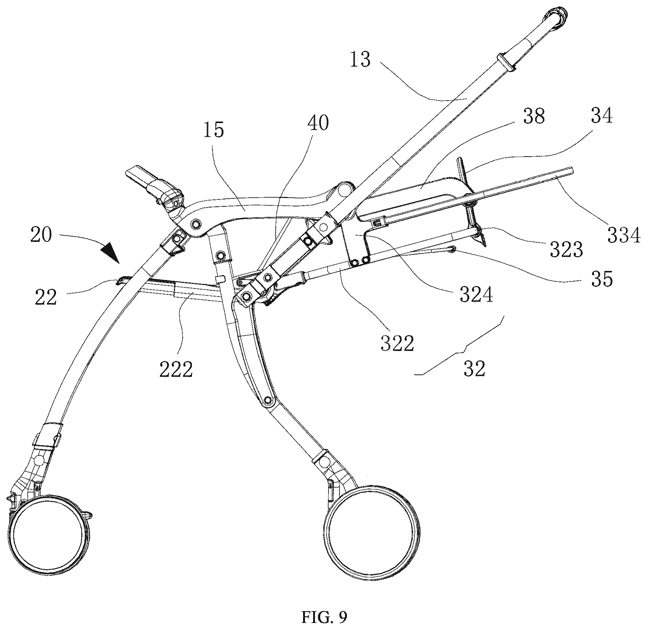

Referring to FIG. 8 and FIG. 9, when the child sitting in the child carrier 100 needs to lie down, the backrest assembly 32 can be rotated backward through the angle adjustment mechanism 35, and the linkage side element 38 can be driven to be rotated relative to the seat frame 20 to a substantially horizontal position. During this process, the connecting belt 40 gradually changes from the loose state to the tight state, and exerts force on the linkage side element 38, so that the positioning pin 326 starts to slide toward an end of the sliding groove 386 away from the connecting seat 39, thereby the linkage side element 38 can start to slide downward relative to the canopy fixing base 324, and further drives the headrest assembly 34 to overcome the elastic force of the resilient element 36 and rotate forward relative to the top section 323 of the backrest support element 322. When the positioning pin 326 is located at the end of the sliding groove 386 away from the connecting seat 39, the headrest assembly 34 rotates to a state substantially perpendicular to the backrest assembly 32, and the torsion spring portion 362 is deformed to accumulate elastic restoring force. In a state shown in Fig. 9, the child can lie down on the backrest assembly 32 in the substantially horizontal position, while the substantially vertical headrest assembly 34 can produce an effect similar to a blocking wall, thereby preventing the child from sliding toward the head or falling from the child carrier 100 to cause danger.

Similarly, when the backrest assembly 32 needs to be rotated from the horizontal position to the vertical position again, the backrest assembly 32 can be rotated forward by releasing angle adjustment mechanism 35. The connecting belt 40 gradually changes from the tight state to the loose state, and stops pulling the linkage side element 38. The headrest assembly 34 drives the linkage side element 38 to slide upwards by the elastic restoring force of the resilient member 36, and finally the headrest assembly 34 returns to the state substantially parallel to the backrest assembly 32.

To sum up, through the design of the linkage structure between the backrest assembly 32, the headrest assembly 34, and the linkage side element 38, cooperating with the connecting belt 40 and the resilient element 36, when the backrest assembly 32 rotates, the headrest assembly 34 can rotate together with backrest assembly 32. In this way, the user only needs to operate the backrest assembly 32 to move the headrest assembly 34 to its appropriate position, which improves the convenience and safety of use.

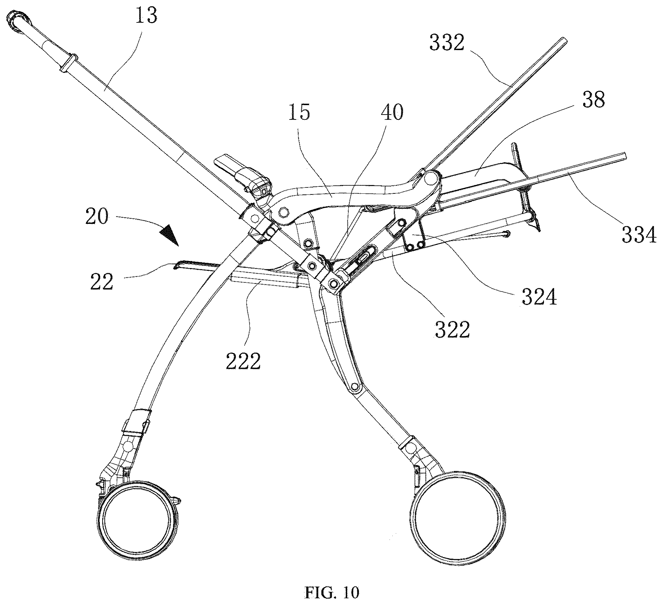

Referring to FIG. 9 and FIG. 10, in this embodiment, since the seat plate 22 can slide relative to the seat support rod 21, when the handle pushing rod 13 rotates relative to the main frame 10, the seat plate 22 can move from the first position to the second position relative to the main frame 10, thereby causing the child sitting in the child carrier 100 to move, that is, a center of gravity of the entire child carrier 100 changes. In this way, the user can rotate the handle pushing rod 13 to adjust the center of gravity of the child carrier 100 as required, so that the center of gravity of the child carrier 100 can moves backward after changing direction, and it is more labor-saving to push. Compared with the conventional child carrier where the backrest support element, canopy fixing base etc. are fixed directly to the main frame, the backrest support element 322 and the canopy fixing base 324 of this embodiment are directly provided on the seat frame 20, so that a front and rear sliding of the seat plate 22 will not be affected.

Although the respective embodiments have been described one by one, it shall be appreciated that the respective embodiments will not be isolated. Those skilled in the art can apparently appreciate upon reading the disclosure of this application that the respective technical features involved in the respective embodiments can be combined arbitrarily between the respective embodiments as long as they have no collision with each other. Of course, the respective technical features mentioned in the same embodiment can also be combined arbitrarily as long as they have no collision with each other.

The foregoing descriptions are merely specific embodiments of the present application, but are not intended to limit the protection scope of the present application. Any variation or replacement readily figured out by a person skilled in the art within the technical scope disclosed in the present application shall all fall within the protection scope of the present application. Therefore, the protection scope of the present application shall be subject to the protection scope of the appended claims.

### Preferred embodiments

Point 1 A child carrier, comprising:
   a main frame;
   a seat frame provided on the main frame; and
   a backrest frame comprising:
      a backrest assembly capable of rotating between a vertical position and a horizontal position relative to the seat frame;
      a headrest assembly pivotally connected to a top of the backrest assembly;
      a linkage side element slidably connected to the backrest assembly, a top of the linkage side element being pivotally connected to the headrest assembly, and a bottom of the linkage side element being connected to the seat frame through a connecting belt; and
      a resilient element provided between the backrest assembly and the headrest assembly.
Point 2 The child carrier according to point 1, wherein the backrest assembly comprises a backrest support element and a canopy fixing base fixed on the backrest support element, a bottom of the backrest support element is pivotally connected to the seat frame, the linkage side element is slidably connected to an end of the canopy fixing base.
Point 3 The child carrier according to point 2, wherein the linkage side element is provided with a sliding groove, and a top of the canopy fixing base is provided with a positioning pin capable of sliding in the sliding groove.
Point 4 The child carrier according to point 3, wherein when the positioning pin is located at any end of the sliding groove, the linkage side element is capable of rotating relative to the canopy fixing base around the positioning pin.
Point 5 The child carrier according to any one of points 2 to 4, wherein the backrest assembly further comprises an angle adjustment mechanism configured to adjust an inclination angle of the backrest support element relative to the seat frame.
Point 6 The child carrier according to any one of points 2 to 5, wherein the backrest assembly further comprises a first canopy support strip and a second canopy support strip, both ends of the first canopy support strip are pivotally connected to two said canopy fixing bases, respectively, and both ends of the second canopy support strip are fixed on the two said canopy fixing bases, respectively.
Point 7 The child carrier according to any one of the preceding points, wherein the linkage side element is provided with a hanging lug, the seat frame is provided with a fixing hole, the backrest frame further comprises a connecting base pivotally connected to the seat frame, the connecting base is provided with a limiting hole, one end of the connecting belt is fixed on the hanging lug, and the other end of the connecting belt extends through the limiting hole and is fixed in the fixing hole.
Point 8 The child carrier according to any one of the preceding points, wherein the connecting belt is a flexible webbing, the connecting belt is in a loose state when the backrest assembly is located in the vertical position, the connecting belt is in a tight state when the backrest assembly is located in the horizontal position.
Point 9 The child carrier according to any one of the preceding points, wherein the resilient element is a torsion spring configured to keep the headrest assembly in a state parallel to the backrest assembly.
Point 10 The child carrier according to point 9, wherein the resilient element comprises a torsion spring portion fixed to a top section of the backrest assembly, and a pushing portion connected to the torsion spring portion and abutting against a front of the headrest assembly.
Point 11 The child carrier according to any one of the preceding points , wherein the headrest assembly is in a shape of a plate, tops of the two said linkage side elements are pivotally connected to left and right sides of the headrest assembly.
Point 12 The child carrier according to any one of the preceding points wherein the main frame comprises a handle pushing rod, the seat frame and a bottom end of the linkage side element are pivotally connected to the handle pushing rod.
Point 13 The child carrier according to point 12 wherein the seat frame comprises a seat support rod and a seat plate, the seat plate is driven by the handle pushing rod to slide on the seat support rod.

## Claims

1. A child carrier (100), comprising:
a main frame (10) comprising a pair of front leg rods (11), a pair of rear leg rods (12), a handle pushing rod (13), two armrests (15), and two auxiliary rods (16), wherein top ends of the front leg rod (11) and the rear leg rod (12) on the same side are pivotally connected to a front end of the armrest (15) on the same side, the handle pushing rod (13) has two side rod sections (131), bottom ends of the two side rod sections (131) are pivotally connected to the two rear leg rods (12), respectively, the two auxiliary rods (16) are located on an inner side of the two side rod sections (131), respectively, a bottom end of the auxiliary rod (16) is pivotally connected to the bottom end of the side rod section (131), and a rear end of the armrest (15) is pivotally connected to a top end of the auxiliary rod (16);
a seat frame (20) provided on the main frame (10); and
a backrest frame (30) comprising:
a backrest assembly (32) capable of rotating between a vertical position and a horizontal position relative to the seat frame (20);
a headrest assembly (34) pivotally connected to a top of the backrest assembly (32);
a linkage side element (38) slidably connected to the backrest assembly (32), a top of the linkage side element (38) being pivotally connected to the headrest assembly (34), and a bottom of the linkage side element (38) being connected to the seat frame (20) through a connecting belt (40); and
a resilient element (36) provided between the backrest assembly (32) and the headrest assembly (34).

2. The child carrier (100) according to claim 1, wherein the backrest assembly (32) comprises a backrest support element (322) and at least one canopy fixing base (324) fixed on the backrest support element (322), a bottom of the backrest support element (322) is pivotally connected to the seat frame (20), the linkage side element (38) is slidably connected to an end of the at least one canopy fixing base (324).

3. The child carrier (100) according to claim 2, wherein the linkage side element (38) is provided with a sliding groove (386), and a top of the at least one canopy fixing base (324) is provided with a positioning pin (326) capable of sliding in the sliding groove (386).

4. The child carrier (100) according to claim 3, wherein when the positioning pin (326) is located at any end of the sliding groove (386), the linkage side element (38) is capable of rotating relative to the at least one canopy fixing base (324) around the positioning pin (326).

5. The child carrier (100) according to any one of claims 1 to 4, wherein the backrest assembly (32) further comprises an angle adjustment mechanism (35) configured to adjust an inclination angle of the backrest frame (30) relative to the seat frame (20).

6. The child carrier (100) according to claim 1 or 5, wherein the backrest assembly (32) comprises a backrest support element (322) and at least one canopy fixing base (324) fixed on the backrest support element (322), the at least one canopy fixing base (324) comprises two canopy fixing bases (324) spaced apart in a left-right direction, the backrest assembly (32) further comprises a first canopy support strip (332) and a second canopy support strip (334), both ends of the first canopy support strip (332) are pivotally connected to the two canopy fixing bases (324), respectively, and both ends of the second canopy support strip (334) are fixed on the two said canopy fixing bases (324), respectively.

7. The child carrier (100) according to any one of the preceding claims, wherein the linkage side element (38) is provided with a hanging lug (388), the seat frame (20) is provided with a fixing hole (224), the backrest frame (30) further comprises a connecting seat (39) pivotally connected to the seat frame (20), the connecting seat (39) is provided with a limiting hole (392), one end of the connecting belt (40) is fixed on the hanging lug (388), and the other end of the connecting belt (40) extends through the limiting hole (392) and is fixed in the fixing hole (224).

8. The child carrier (100) according to any one of the preceding claims, wherein the connecting belt (40) is a flexible webbing, the connecting belt (40) is in a loose state when the backrest assembly (32) is located in the vertical position, the connecting belt (40) is in a tight state when the backrest assembly (32) is located in the horizontal position.

9. The child carrier (100) according to any one of the preceding claims, wherein the resilient element (36) is a torsion spring configured to keep the headrest assembly (34) in a state substantially parallel to the backrest assembly (32).

10. The child carrier (100) according to claim 9, wherein the resilient element (36) comprises a torsion spring portion (362) sleeved on a top section of the backrest assembly (32), and a pushing portion (364) connected to the torsion spring portion (362) and abutting against a front of the headrest assembly (34).

11. The child carrier (100) according to any one of the preceding claims, wherein the headrest assembly (34) is in a shape of a plate, tops of the two said linkage side elements (38) are pivotally connected to left and right sides of the headrest assembly (34).

12. The child carrier (100) according to any one of the preceding claims, wherein the seat frame (20) is pivotally connected to the handle pushing rod (13).

13. The child carrier (100) according to claim 12, wherein the seat frame (20) comprises a seat support rod (21) and a seat plate (22), the seat plate (22) is driven by the handle pushing rod (13) to slide on the seat support rod (21).

14. The child carrier (100) according to claim 1, wherein the backrest assembly (32) comprises a backrest support element (322) and at least one canopy fixing base (324) fixed on the backrest support element (322), a bottom of the backrest support element (322) is pivotally connected to the seat frame (20), a top of the backrest support element (322) is pivotally connected to the headrest assembly (34), wherein the backrest support element (322) comprises a side section (321), the at least one canopy fixing base (324) is fixed on the side section (321), and the at least one canopy fixing base (324) extends in a direction substantially perpendicular to the side section (321).

15. The child carrier (100) according to claim 13, wherein the backrest assembly (32) is pivotally connected to the seat plate (22).
